# EUROPEAN PATENT APPLICATION

(11) **EP 4 637 044 A1**
(43) Date of publication of application: **22.10.2025**
(21) Application number: 23903919.1
(22) Date of filing: 11.12.2023
(51) Int. Cl.: H04B 7/06, H04B 7/0408, H04B 7/08, H04W 16/28, H04L 1/18, H04W 84/12

(54) **METHOD AND DEVICE FOR PERFORMING BEAMFORMING TRAINING PROCEDURE CONSIDERING MILLIMETER WAVE BAND IN WLAN SYSTEM**

(30) Priority: 12.12.2022 KR 20220172874
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Mooser, Sebastian Thomas
(86) International application number: PCT/KR2023/020300
(87) International publication number: WO 2024/128716

(57) **Abstract**

Disclosed are a method and device for performing a beamforming training procedure considering a millimeter wave band in a WLAN system. A method performed by a first STA in a WLAN system according to the present invention may comprise the steps of: in a first operation frequency band, checking information related to the initiation of a sector sweep operation in a second operation band; in the second operation frequency band, measuring the best transmission sector of a second STA, on the basis of receiving a plurality of frames for the sector sweep operation from the second STA, and performing a reception sector sweep of the first STA; in the first operation frequency band, transmitting a feedback frame including identification information about the best transmission sector to the second STA; and in the first operation frequency band, receiving a response frame to the feedback frame from the second STA.

## Description

### [TECHNICAL FIELD]

The present disclosure relates to a method and device for performing a beamforming training procedure considering a millimeter wave (mmWave) band in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

A technical object of the present disclosure is to provide a method and device for performing a beamforming training procedure considering a millimeter wave (mmWave) band in a wireless local area network (WLAN) system.

A technical object of the present disclosure is to provide a method and device for performing a sector level sweep (SLS) procedure and a beam refinement protocol (BRP) procedure when a mmWave band is supported in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: identifying, in a first operating frequency band, information related to initiation of a sector sweep operation in a second operating frequency band, the information including allocation information of a resource for the sector sweep operation; in the second operating frequency band, based on receiving a plurality of frames for the sector sweep operation in the resource from the second STA, measuring a best transmission (TX) sector of the second STA and performing a reception (RX) sector sweep of the first STA; transmitting, in the first operating frequency band, a feedback frame including identification information for the best TX sector to the second STA; and receiving, in the first operating frequency band, a response frame to the feedback frame from the second STA in the first operating frequency band.

A method performed by a second station (STA) in a wireless LAN system accodring to an additional aspect of the present disclosure may comprise: identifying, in a first operating frequency band, information related to initiation of a sector sweep operation in a second operating frequency band, the information including allocation information of a resource for the sector sweep operation; transmitting, in the second operating frequency band, a plurality of frames for the sector sweep operation in the resource to a first STA; receiving, in the first operating frequency band, a feedback frame including identification information for a best Tx sector of the second STA from the first STA; and transmitting, in the first operating frequency band, a response frame to the feedback frame to the first STA.

### [Technical Effects]

According to the present disclosure, a method and device for performing a beamforming training procedure considering a millimeter wave (mmWave) band in a wireless local area network (WLAN) system may be provided.

According to the present disclosure, when the mmWave band is supported in a wireless LAN system, a method and device for performing a sector level sweep (SLS) procedure and a beam refinement protocol (BRP) procedure may be provided.

According to the present disclosure, there is an advantage in that a high data rate and low latency can be achieved by supporting the mmWave band in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for explaining examples of resource units of a wireless LAN system to which the present disclosure may be applied.
FIG. 9 is a diagram for explaining examples of resource units of a wireless LAN system to which the present disclosure may be applied.
FIG. 10 is a diagram for explaining examples of resource units of a wireless LAN system to which the present disclosure may be applied.
FIG. 11 is a diagram showing regional examples of channelization of a millimeter wave (mmWave) band to which the present disclosure may be applied.
FIG. 12 illustrates an example of an SLS procedure between an AP and a STA according to an embodiment of the present disclosure.
FIG. 13 illustrates another example of an SLS procedure between an AP and a STA according to an embodiment of the present disclosure.
FIG. 14 illustrates another example of an SLS procedure between an AP and a STA according to an embodiment of the present disclosure.
FIG. 15 illustrates an example of a BRP procedure between an AP and a STA according to an embodiment of the present disclosure.
FIG. 16 illustrates another example of a BRP procedure between an AP and a STA according to an embodiment of the present disclosure.
FIG. 17 illustrates another example of a BRP procedure between an AP and a STA according to an embodiment of the present disclosure.
FIG. 18 illustrates an operation flow chart by a first STA according to an embodiment of the present disclosure.
FIG. 19 illustrates an operation flow chart by a second STA according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

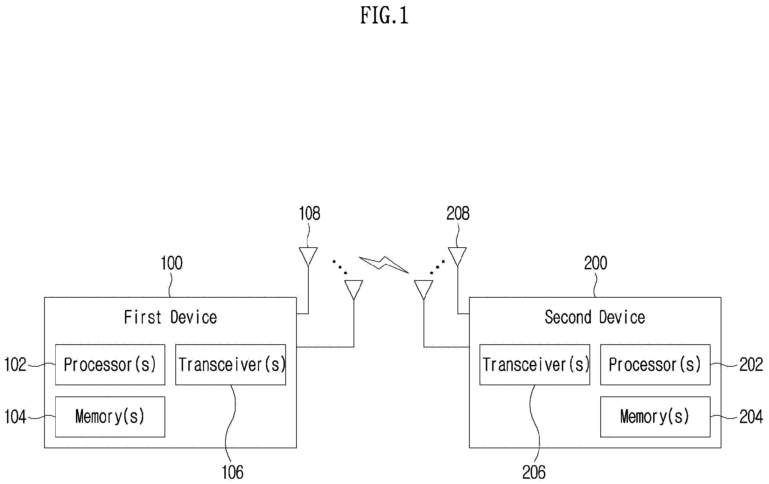

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

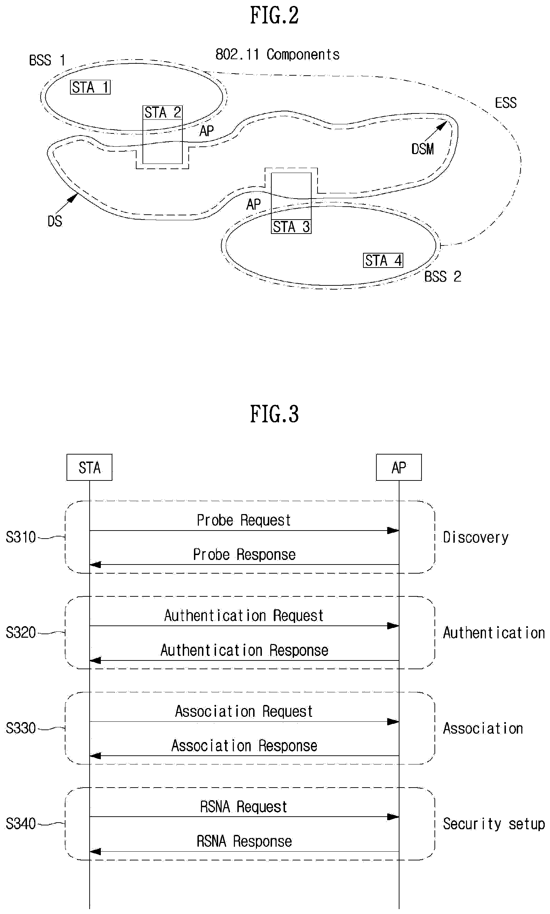

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

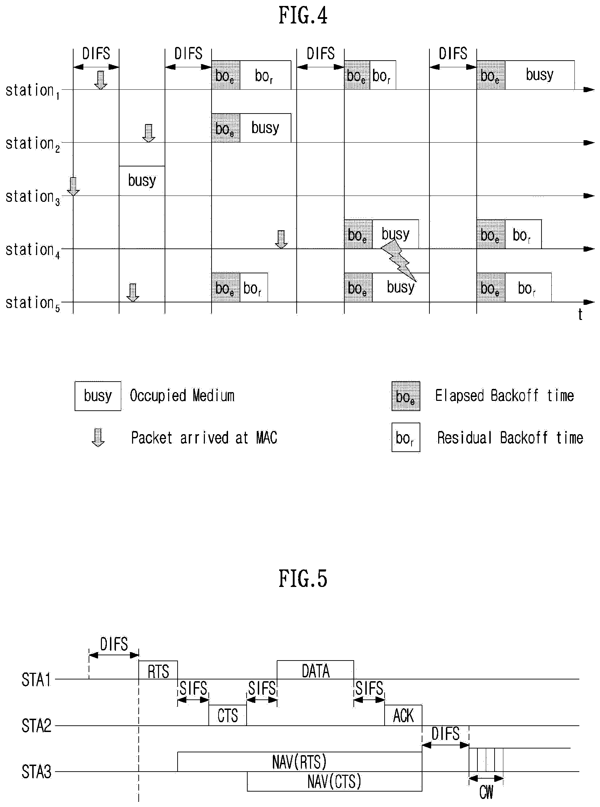

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

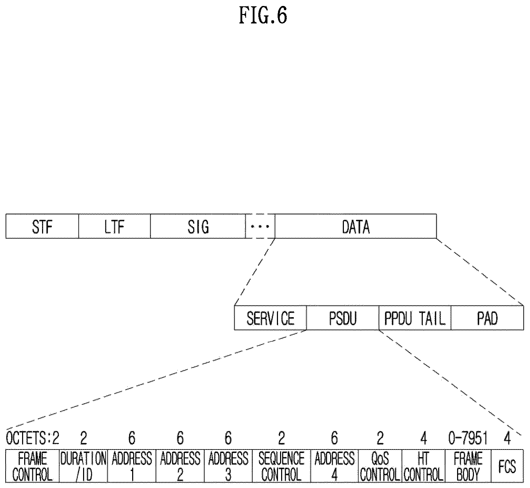

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

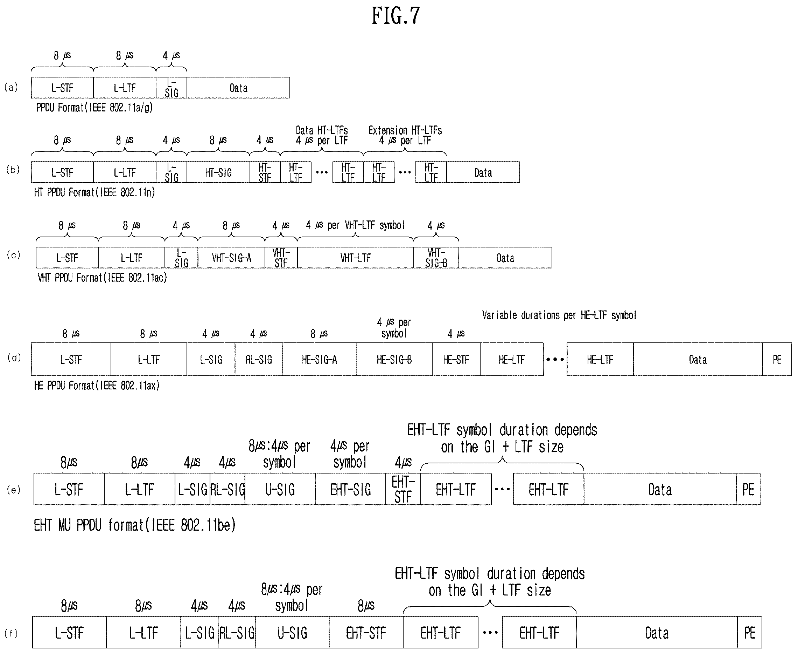

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource unit

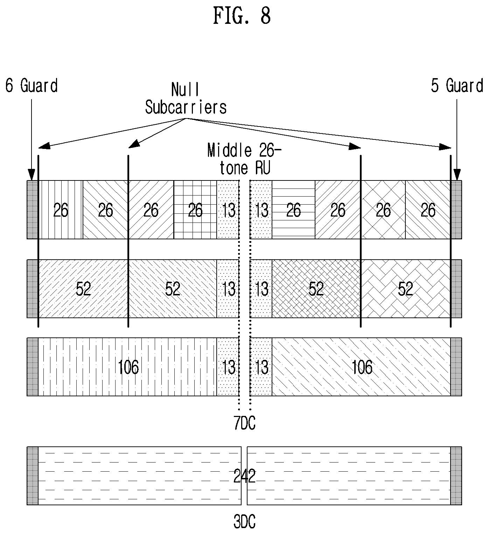

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

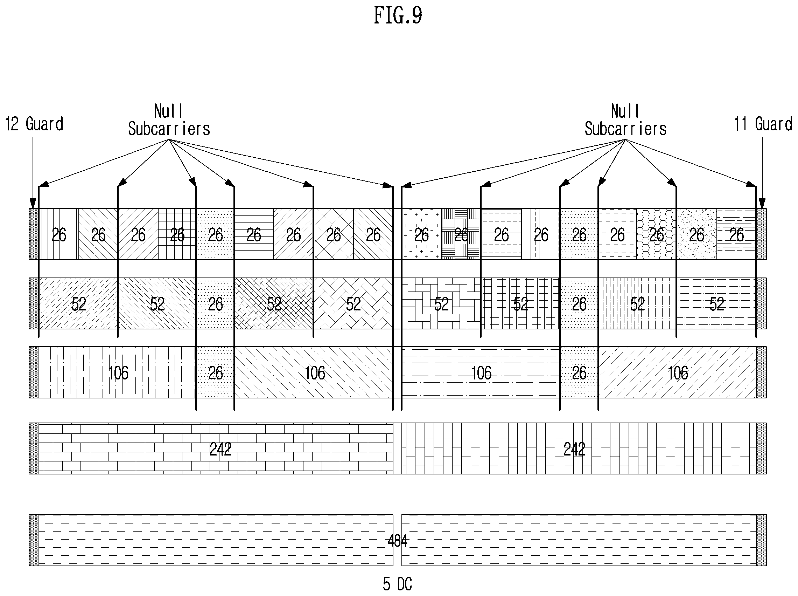

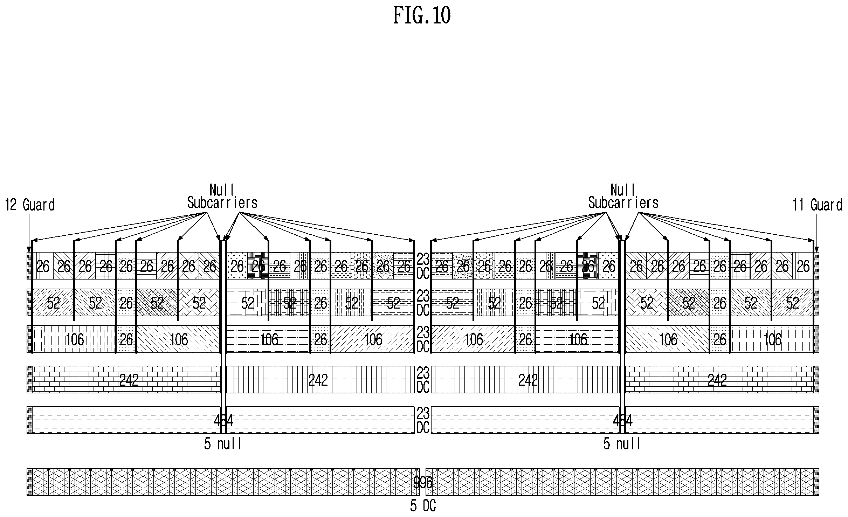

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8 .

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, an STA (e.g., an AP) transmitting the DL MU PPDU may allocate a first RU (e.g., 26/52/106/242-RU, etc.) to a first STA, and a second RU (e.g., 26/52/106/242-RU, etc.) to a second STA. That is, the transmitting STA (e.g., the AP) may transmit X-STF (e.g., X, for HE, EHT, etc.), X-LTF, and Data fields for the first STA through the first RU within one MU PPDU, and can transmit X-STF, X-LTF, and Data fields for the second STA through the second RU. Information about the RU assignment may be signaled via the X-SIG (e.g., X stands for HE, EHT, U) field in the X-PPDU format.

### Method for performing beamforming training procedure considering support of millimeter wave (mmWave) band

The description of the wireless LAN system described above may be mainly applied to a wireless LAN system operating in an existing operating frequency band, for example, a sub-7 GHz band (for example, a 2.4 GHz, 5 GHz, or 6 GHz band). For example, the PPDU format described above may be mainly applied to a wireless LAN system operating in a sub-7 GHz band. Additionally, a wireless LAN system operating in a high operating frequency band, for example, a millimeter wave (mmWave) band such as a 60 GHz band, has been defined.

The present disclosure describes examples of beamforming training procedures that take into account improved throughput and efficiency in the mmWave band, including (i.e., not limited to) the 60 GHz band.

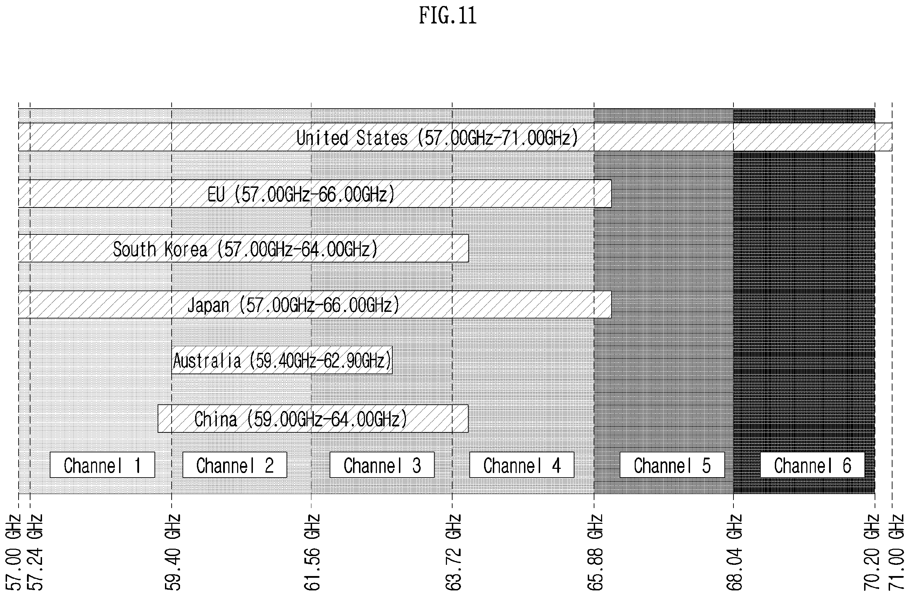

FIG. 11 is a diagram showing regional examples of channelization of millimeter wave (mmWave) bands to which the present disclosure may be applied.

The example in Fig. 11 shows the mmWave bands used in the United States, the European Union, South Korea, Japan, Australia, and China, and shows the sizes and locations of channels defined in the bands. For example, the bandwidth of each of the six channels may correspond to 2.16 GHz. In addition, when bandwidth bonding is applied, up to four unit bandwidths may be bonded to support a bandwidth of up to 8.64 GHz.

Unlike these existing wireless LAN systems, technologies under discussion such as UHR are discussing using sub-7 GHz bands (e.g., 2.4 GHz, 5 GHz, or 6 GHz bands) and/or mmWave bands (e.g., 60 GHz bands) to achieve high data rates and low delays. For example, for specific use cases requiring high throughput, it may be difficult to satisfy the requirements with only the bandwidth of the currently defined channel, so transmitting/receiving specific PPDUs through the mmWave band may be considered.

However, since the signal has strong straightness in the mmWave band, it is greatly affected by obstacles, etc., and as a result, signal attenuation can occur very significantly.

Therefore, to overcome such problems, analog beamforming with a directional antenna may be essential. In this case, a sector level sweep (SLS) procedure and a beam refinement protocol (BRP) procedure may be required as beamforming training procedures.

In the present disclosure, an SLS procedure and a BRP procedure for beam training in a next-generation wireless LAN system (e.g., UHR, etc.) capable of supporting mmWave bands are proposed.

In this regard, although the present disclosure proposes/describes the SLS procedure and the BRP procedure assuming a SISO situation, the method proposed in the present disclosure may also be extended and applied to a MIMO situation.

As described above, the beam training procedure may include an SLS phase corresponding to the SLS procedure and a BRP phase corresponding to the BRP procedure.

At this time, a station that initiates a beam training procedure may be referred to as an initiator, and a counterpart station (e.g., a pairing station) may be referred to as a responder. For example, an AP, a PCP, etc. may be configured/assigned as an initiator of a beam training procedure, and a non-AP STA, etc. may be configured/assigned as a responder.

In this regard, for beam training, the initiator and/or the responder may perform a transmit sector sweep and/or a receive sector sweep.

For the method proposed in the present disclosure, the term sector may be replaced with terms having the same/similar technical meaning, such as region, direction, antenna configuration, or antenna weight vector.

The embodiments in the present disclosure below are described as a representative example in which the initiator of the beam training procedure is an AP and the responder is an STA (e.g., a non-AP STA).

### Embodiment 1

This embodiment is for a method for performing a sector level sweep (SLS) procedure in a wireless LAN system supporting the mmWave band.

First, the TX sector sweep method of the AP is described.

For sector sweep, the AP may transmit bursts of specific PPDUs/frames periodically (e.g., the transmission period of a beacon) on a specific channel for a specific time period. Here, a burst may mean a unit composed of (consecutive) a plurality of PPDUs/frames.

For example, the specific time and specific channel may correspond to specific time and frequency resources allocated/assigned for beam training procedure in the mmWave band.

Each PPDU/frame included in the burst is transmitted in a specific direction, and a specific sector ID may be assigned to each PPDU/frame.

In this regard, a specific PPDU/frame may act as a beacon. In this case, the specific PPDU/frame may include/carry various information other than sector sweep, like a conventional beacon frame. Alternatively, the specific PPDU/frame may correspond to a PPDU/frame that only includes information for sector sweep. In this case, the specific PPDU/frame may be defined to include only simple information such as a sector ID, and the other information may be defined to be indicated in another operating frequency band (e.g., sub-7 GHz band).

At this time, the number of PPDUs/frames transmitted within the aforementioned burst may be fixed. Alternatively, the number of PPDUs/frames transmitted within the burst is not fixed, and information indicating whether the corresponding PPDU/frame corresponds to the last PPDU/frame of the burst (e.g., corresponds to the last PPDU/frame or there are PPDUs/frames remaining to be transmitted) may be indicated using 1-bit information within the PPDU/frame.

Additionally or alternatively, sector sweeps between the AP and specific STAs may be performed by allocating specific time and/or frequency resources, such as through transmission of control/management frames in the sub-7 GHz band.

In this case as well, as in the aforementioned method, the PPDU/frame is transmitted in a format of a burst, and each PPDU/frame may be transmitted in a specific direction, in the corresponding time and/or frequency resources. In this regard, the burst transmission may be performed by considering only some sector candidates using previous information.

At this time, the number of PPDUs/frames transmitted within the aforementioned burst may be fixed. Alternatively, the number of PPDUs/frames transmitted within the burst is not fixed, and information indicating whether the corresponding PPDU/frame corresponds to the last PPDU/frame of the burst (e.g., corresponds to the last PPDU/frame or there are PPDUs/frames remaining to be transmitted) may be indicated using 1-bit information within the PPDU/frame. Alternatively, the number of PPDUs/frames transmitted within the burst may also be indicated through transmission of frames, etc. in the sub-7 GHz band.

Next, an TX sector sweep method of a STA is described.

Similar to the TX sector sweep method of the AP described above, the STA may also transmit a burst of a specific PPDU/frame. At this time, after the TX sector sweep of the AP, the STA may transmit a burst of the corresponding PPDU/frame on the same channel (or subchannel).

Even in this case, each PPDU/frame included in the burst is transmitted in a specific direction, and a specific sector ID may be assigned to each PPDU/frame. Here, information about the specific sector ID may be indicated in each PPDU/frame.

Additionally, the number of PPDUs/frames transmitted within the aforementioned burst may be fixed. Alternatively, the number of PPDUs/frames transmitted within the burst is not fixed, and information indicating whether the corresponding PPDU/frame corresponds to the last PPDU/frame of the burst (e.g., corresponds to the last PPDU/frame or there are PPDUs/frames remaining to be transmitted) may be indicated using 1-bit information within the PPDU/frame.

If the sub-7GHz band is not managed, multiple STAs may attempt sector sweeps, which may result in collisions. Therefore, it may be desirable to allocate specific time and/or frequency resources for TX sector sweeps to each STA in the sub-7GHz band.

Additionally or alternatively, a method utilizing antenna pattern reciprocity may be considered to reduce overhead and simplify procedures.

For example, when performing a TX sector sweep of an AP, a specific training field (e.g., a TRN field used in an EDMG BRP RX packet, etc.) may be inserted at the end of a PPDU to enable the STA to perform an RX sector sweep. In this case, the TX sector sweep of the STA may be omitted by utilizing reciprocity, and the STA may use the best RX sector as the best TX sector. Similarly, the AP may also use the best TX sector as the best RX sector, and thus, an additional RX sector sweep in the AP may not be required.

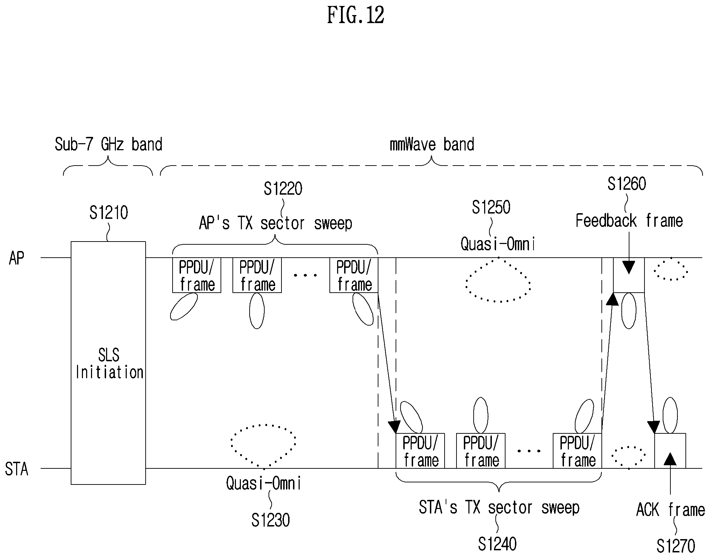

Hereinafter, the SLS procedure described in this embodiment will be specifically described with reference to FIGS. 12 to 14.

FIG. 12 illustrates an example of an SLS procedure between an AP and a STA according to an embodiment of the present disclosure.

Referring to FIG. 12, for the SLS procedure between the AP and the STA, SLS initiation may be configured/defined to be performed in the sub-7 GHz band, and the remaining operations may be performed in the mmWave band.

First, SLS initiation may be performed in the sub-7 GHz band for AP and STA (S1210).

For example, in relation to transmission of sector sweep and feedback/ACK frame in SLS procedure, allocation information for specific time and/or frequency resources (e.g., channel, subchannel), information on the number of PPDU/frames in a burst of PPDU/frame, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of specific PPDUs/frames in the allocated time and/or frequency resources (S1220).

In this regard, each PPDU/frame included in the burst may include information indicating a sector ID for the transmission direction.

At this time, the STA may measure the best TX sector ID of the AP using the corresponding PPDU/frame (S 1230). In this case, the STA may receive the burst of the specific PPDU/frame in a quasi-omni mode.

Here, the best TX sector ID can be configured in the form of a list containing one or more TX sector IDs.

After a burst transmission of the AP, the STA may transmit a burst of a specific PPDU/frame on the allocated time and/or frequency resources or on the same frequency resources after a certain period of time (e.g. SIFS) after the end of the burst transmission of the AP (S 1240).

In this regard, each PPDU/frame included in the burst may include information indicating a sector ID for the transmission direction. At the same time, the STA may feed back information for the best TX sector ID of the AP to the AP.

At this time, the AP may measure the best TX sector ID of the STA using the corresponding PPDU/frame (S1250). In this case, the AP may receive the burst of the specific PPDU/frame in a quasi-omni mode.

After the burst transmission of the STA, the AP may transmit a feedback frame to the STA according to the best TX sector direction fed back by the STA on the allocated time and/or frequency resources or on the same frequency resources after a certain time (e.g., SIFS) after the burst transmission of the STA ends (S1260). Here, the feedback frame may include information on the best TX sector ID of the STA. For example, the STA may receive the feedback frame in a quasi-omni mode.

Next, the STA may transmit a response frame (e.g., an ACK frame) according to the best TX sector direction fed back by the AP on the same frequency resource after a certain period of time (e.g., SIFS) after the end of the transmission of the feedback frame by the AP and/or the allocated time and/or frequency resource (S1270). For example, the STA may receive the feedback frame in a quasi-omni mode.

With respect to the steps in the aforementioned FIG. 12, step S1210 may be set/defined to be performed in the sub-7 GHz band, and the remaining steps (i.e., steps S1220 to S1270) may be configured/defined to be performed in the mmWave band.

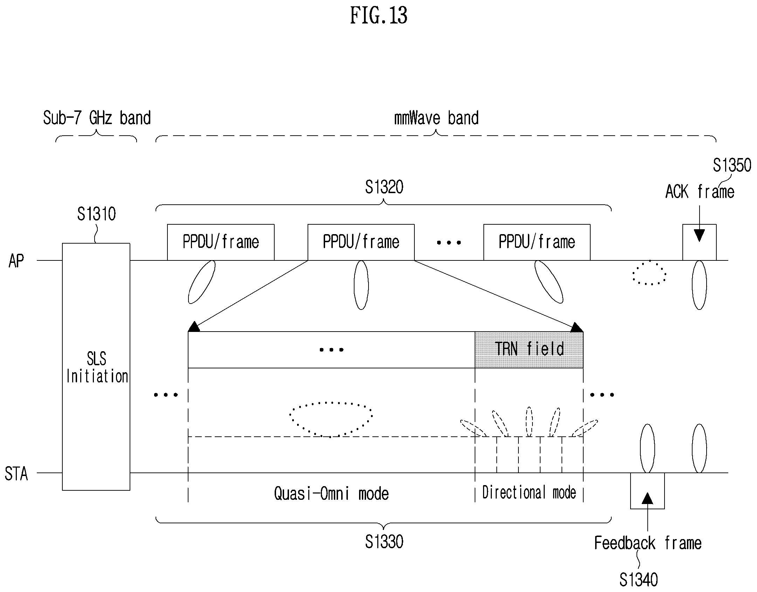

FIG. 13 illustrates another example of an SLS procedure between an AP and a STA according to an embodiment of the present disclosure.

Referring to FIG. 13, compared to FIG. 12, the SLS procedure may be simplified by utilizing antenna pattern reciprocity as described above in the present disclosure.

First, SLS initiation may be performed in the sub-7 GHz band for AP and STA (S1310).

For example, in relation to transmission of sector sweep and feedback/ACK frame in SLS procedure, allocation information for specific time and/or frequency resources (e.g., channel, subchannel), information on the number of PPDU/frames in a burst of PPDU/frame, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of specific PPDUs/frames in the allocated time and/or frequency resources (S1320).

In this regard, each PPDU/frame included in the burst may include information indicating a sector ID for the transmission direction.

At this time, the STA may measure the best TX sector ID of the AP using the PPDU/frame included in the burst and perform its own RX sector sweep (S1330).

In this regard, a specific training field (TRN field) may be defined to be included in the last part of the corresponding PPDU/frame to support RX sector sweep of the STA. For example, the specific training field may be designed to have the same or similar structure as the TRN field of the EDMG BRP-RX/TX PPDU, the TRN-R unit, etc.

Specifically, the STA performs reception operation in quasi-omni mode only during TX sector sweep of the AP, and may be configured/defined to operate in RX sector sweep mode only for specific training fields.

After the burst transmission of the AP, the STA may transmit a feedback frame to the AP in the same TX direction using its best RX sector in the same frequency resource after a certain time (e.g. SIFS) after the burst transmission of the AP is finished, using the allocated time and/or frequency resources (S1340). Here, the feedback frame may include information about the best TX sector ID of the AP. For example, the AP may receive the feedback frame in a quasi-omni mode.

Next, the AP may transmit a response frame (e.g., an ACK frame) according to the best TX sector direction fed back by the STA on the same frequency resource after a certain period of time (e.g., SIFS) after the assigned time and/or frequency resource or the feedback frame transmission of the STA is ended (S1350). For example, the STA may receive the feedback frame according to its best RX sector direction.

In a simplified procedure as in Fig. 13, the STA may use its measured best RX sector in the TX sector direction, and the AP may use its best TX sector fed back from the STA in the RX sector direction.

Additionally or alternatively, in the procedures in FIGS. 12 and 13 described above, when transmitting a burst of PPDU/frame, the sector ID and its order information may be indicated in the sub-7 GHz band. In this case, the information may be defined not to be indicated in each PPDU/frame within the burst.

With respect to the steps in the aforementioned FIG. 13, step S1310 may be set/defined to be performed in the sub-7 GHz band, and the remaining steps (i.e., steps S1320 to S1350) may be configured/defined to be performed in the mmWave band.

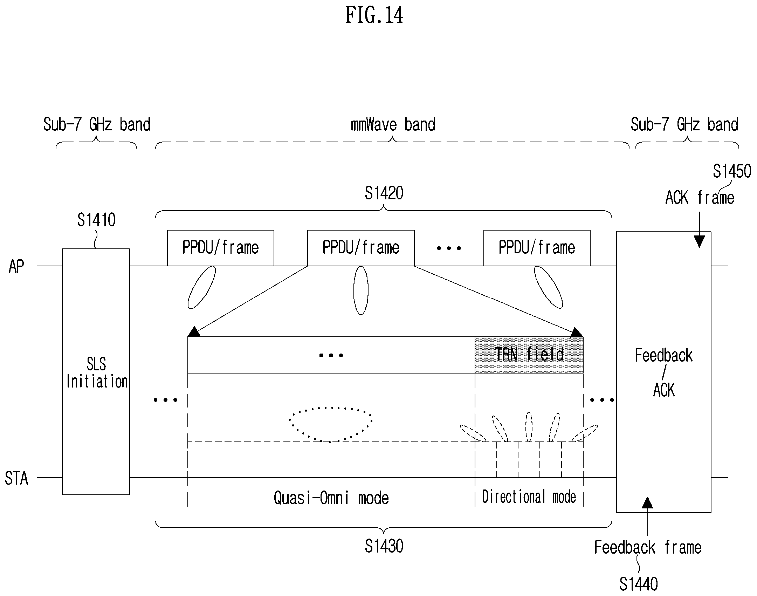

FIG. 14 illustrates another example of an SLS procedure between an AP and a STA according to an embodiment of the present disclosure.

Referring to FIG. 14, compared to FIG. 13, the transmission and reception operations of the feedback frame and the response frame within the SLS procedure may be performed in a different operating frequency band, i.e., the sub-7 GHz band. That is, the SLS initiation, the transmission and reception of the feedback frame, and the transmission and reception of the response frame may be performed in the sub-7 GHz band, and in the mmWave band, it may be configured/defined to simply transmit and receive PPDU/frames for sector sweep.

First, SLS initiation may be performed in the sub-7 GHz band for AP and STA (S1410).

For example, in relation to transmission of sector sweep and feedback/ACK frame in SLS procedure, allocation information for specific time and/or frequency resources (e.g., channel, subchannel) for burst transmission of PPDU/frame by AP, information for the number of PPDU/frame in the burst, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of a specific PPDU/frame in the allocated time and/or frequency resources (S1420).

In this regard, each PPDU/frame included in the burst may include information indicating a sector ID for the transmission direction. If information on the sector ID and order information are transmitted/indicated in the sub-7 GHz band, the information may be omitted from each PPDU/frame.

At this time, the STA may measure the best TX sector ID of the AP using the PPDU/frame included in the burst and perform its own RX sector sweep (S1430). In this case, the STA may perform a reception operation in quasi-omni mode only during the TX sector sweep of the AP.

In this regard, a specific training field (TRN field) to support RX sector sweep of STA may be defined to be included at the end of the corresponding PPDU/frame. For example, the specific training field may be designed to have a structure identical or similar to a TRN field of EDMG BRP-RX/TX PPDU, TRN-R unit, etc.

Specifically, the STA may perform reception operation in quasi-omni mode only during TX sector sweep of the AP, and may be configured/defined to operate in RX sector sweep mode only for specific training fields.

After the burst transmission of the AP, the STA may transmit a feedback frame to the AP in the sub-7 GHz band (S1440).

Here, the feedback frame may include information for the best TX sector ID of the AP.

Next, the AP may transmit a response frame (e.g., an ACK frame) in the sub-7 GHz band (S1450).

In a simplified procedure as in Fig. 14, the STA may use its measured best RX sector in the TX sector direction, and the AP may use its best TX sector fed back from the STA in the RX sector direction.

That is, with respect to the steps in the aforementioned FIG. 14, steps S1410, S1440, and S1450 may be configured/defined to be performed in the sub-7 GHz band, and steps S1420 and S1430 may be performed in the mmWave band.

Additionally, in a simplified procedure such as FIG. 14, when transmitting a frame for feeding back information such as the best sector ID in a sub-7 GHz band, contention may be required, which may cause a delay.

### Embodiment 2

This embodiment relates to a method for performing a beam refinement protocol (BRP) procedure in a wireless LAN system supporting the mmWave band.

The BRP procedure may correspond to a sector sweep procedure to acquire a finer beamforming pattern after the SLS procedure in Embodiment 1.

At this time, in order to simplify the BRP procedure, the AP and/or STA may determine some TX sector candidate(s) and RX sector candidate(s) through the SLS procedure. Information about each sector candidate determined in this way may be indicated in the sub-7 GHz band.

Additionally, a BRP procedure between an AP and a STA may be performed by allocating specific time and/or frequency resources in a sub-7 GHz band. In this case, a TX sector sweep of the AP and an RX sector sweep of the STA may be performed simultaneously using some sector candidates. For this purpose, a specific training field may be inserted into a PPDU/frame transmitted for the sector sweep. For example, the specific training field may be designed to have a structure identical to or similar to a TRN field, a TRN-R unit, or the like of an EDMG BRP-RX/TX PPDU.

Additionally, a simplified BRP procedure may be defined that does not require the reverse procedure by exploiting antenna pattern reciprocity.

For simplicity of the procedure, the BRP procedure in the present disclosure may not include a multiple sector ID detection (MID) procedure. This is because the RX sector sweep is already performed in the SLS procedure, and therefore, the MID procedure corresponding to the procedure for the RX sector sweep is unnecessary.

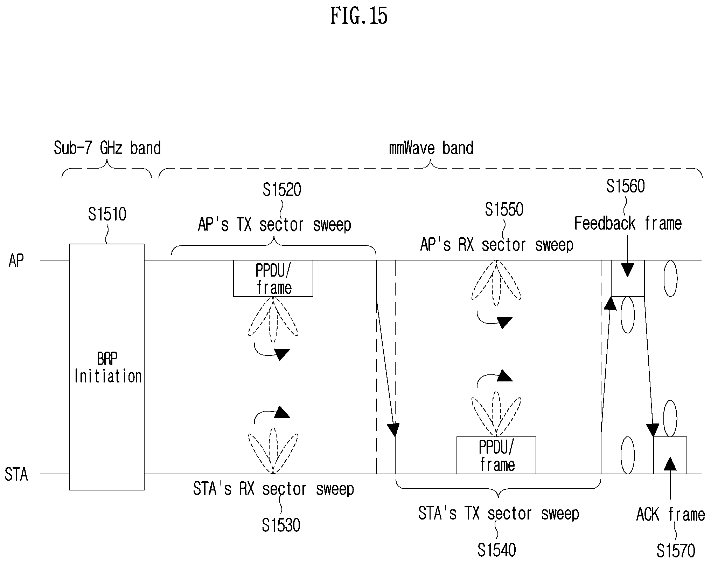

Hereinafter, the BRP procedure described above in this embodiment will be specifically described with reference to FIGS. 15 to 17.

FIG. 15 illustrates an example of a BRP procedure between an AP and a STA according to an embodiment of the present disclosure.

Referring to FIG. 15, for the BRP procedure between the AP and the STA, BRP initiation may be configured/defined to be performed in the sub-7 GHz band, and the remaining operations may be performed in the mmWave band.

First, BRP initiation may be performed in the sub-7 GHz band for AP and STA (S1510).

For example, in relation to transmission of sector sweep and feedback/ACK frames in a BRP procedure, allocation information for specific time and/or frequency resources (e.g., channels, subchannels), information for candidate sectors, and information for TX sector pattern order may be indicated.

In this regard, specific time and/or frequency resources may be resources allocated for operation in the mmWave band.

The AP may transmit a specific PPDU/frame in the allocated time and/or frequency resources (S1520). Here, a specific training field, etc. may be inserted into a specific PPDU/frame so that the STA's RX sector sweep may be performed simultaneously with the AP's TX sector sweep. For example, the specific training field may be designed to have a structure identical to or similar to a TRN field, a TRN-R unit, etc. of an EDMG BRP-RX/TX PPDU. In this regard, information for a TX sector pattern of a specific training field, etc. may be indicated.

At this time, the STA may measure the best TX sector ID of the AP using the corresponding PPDU/frame and perform its own RX sector sweep (S1530).

Here, the best TX sector ID may be configured in the form of a list including one or more TX sector IDs.

After the AP transmits the PPDU/frame, the STA may transmit a specific PPDU/frame on the allocated time and/or frequency resources or on the same frequency resources after a certain time (e.g., SIFS) after the end of the AP's PPDU/frame transmission (S1540). Here, a specific training field, etc. may be inserted into the specific PPDU/frame so that the AP's RX sector sweep may be performed simultaneously with the STA's TX sector sweep. For example, the specific training field may be designed to have the same or similar structure as or similar to the TRN field, TRN-R unit, etc. of the EDMG BRP-RX/TX PPDU. In this regard, information for the TX sector pattern of the specific training field, etc. may be indicated. Additionally, the STA may feed back information for the AP's best TX sector ID to the AP.

At this time, the AP may measure the best TX sector ID of the STA using the corresponding PPDU/frame and perform its own RX sector sweep (S1550).

After the PPDU/frame transmission by the STA, the AP may transmit a feedback frame to the STA according to the best TX sector direction fed back by the STA on the same frequency resource after the allocated time and/or frequency resource or a certain time (e.g. SIFS) after the STA's PPDU/frame transmission ends (S1560). Here, the feedback frame may include information about the best TX sector ID of the STA. For example, the STA may receive the feedback frame according to its best RX sector direction.

After the AP transmits the feedback frame, the STA may transmit a response frame (e.g., an ACK frame) according to the best TX sector direction fed back by the AP on the same frequency resource after a certain period of time (e.g., SIFS) after the end of the AP's feedback frame transmission or the allocated time and/or frequency resource (S1570). For example, the STA may receive the response frame according to its best RX sector direction.

With respect to the steps in the aforementioned FIG. 15, step S1510 may be set/defined to be performed in the sub-7 GHz band, and the remaining steps (i.e., steps S1520 to S1570) may be set/defined to be performed in the mmWave band.

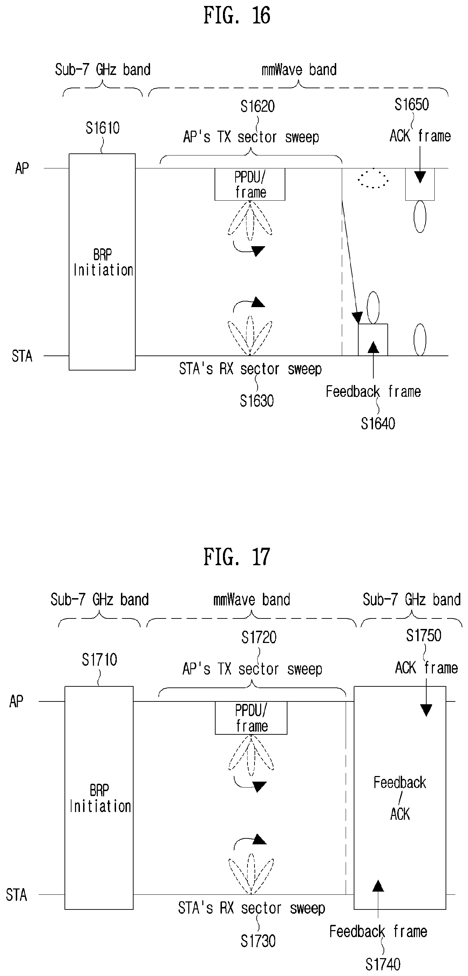

FIG. 16 illustrates another example of a BRP procedure between an AP and a STA according to an embodiment of the present disclosure.

Referring to FIG. 16, compared to FIG. 15, the BRP procedure may be simplified by utilizing antenna pattern reciprocity as described above in the present disclosure.

First, BRP initiation may be performed in the sub-7 GHz band for AP and STA (S1610).

For example, in relation to transmission of sector sweep and feedback/ACK frames in a BRP procedure, allocation information for specific time and/or frequency resources (e.g., channels, subchannels), information for candidate sectors, and information for TX sector pattern order may be indicated.

In this regard, specific time and/or frequency resources may be resources allocated for operation in the mmWave band.

The AP may transmit a specific PPDU/frame in the allocated time and/or frequency resources (S 1620). Here, a specific training field, etc. may be inserted into a specific PPDU/frame so that the STA's RX sector sweep may be performed simultaneously with the AP's TX sector sweep. For example, the specific training field may be designed to have a structure identical to or similar to a TRN field, a TRN-R unit, etc. of an EDMG BRP-RX/TX PPDU. In this regard, information for a TX sector pattern of a specific training field, etc. may be indicated.

At this time, the STA may measure the best TX sector ID of the AP using the corresponding PPDU/frame and perform its own RX sector sweep (S1630).

After the AP transmits the PPDU/frame, the STA may transmit a feedback frame to the AP in the same TX direction using its best RX sector in the same frequency resource after the allocated time and/or frequency resource or a certain amount of time (e.g., SIFS) after the end of the PPDU/frame transmission by the AP (S1640). Here, the feedback frame may include information about the best TX sector ID of the AP. For example, the AP may receive the feedback frame in a quasi-omni mode. Alternatively, the AP may receive the feedback frame in the best RX direction identified through the aforementioned SLS procedure.

After the STA transmits the feedback frame, the AP may transmit a response frame (e.g., an ACK frame) according to the best TX sector direction fed back by the STA on the same frequency resource after a certain time (e.g., SIFS) after the STA ends transmitting the feedback frame or the allocated time and/or frequency resource (S1650). In this case, the STA may receive the response frame according to its best RX sector direction.

In a simplified procedure as in Fig. 16, the STA may use its measured best RX sector in the TX sector direction, and the AP may use its best TX sector fed back from the STA in the RX sector direction.

With respect to the steps in the aforementioned FIG. 16, step S1610 may be configured/defined to be performed in the sub-7 GHz band, and the remaining steps (i.e., steps S1620 to S1650) may be configured/defined to be performed in the mmWave band.

FIG. 17 illustrates another example of a BRP procedure between an AP and a STA according to an embodiment of the present disclosure.

Referring to FIG. 17, compared to FIG. 16, the transmission and reception operations of the feedback frame and the response frame within the BRP procedure may be performed in a different operating frequency band, i.e., the sub-7 GHz band. That is, the BRP initiation, the transmission and reception of the feedback frame, and the transmission and reception of the response frame may be performed in the sub-7 GHz band, and in the mmWave band, it may be configured/defined to simply transmit and receive PPDU/frames for sector sweep.

First, BRP initiation may be performed in the sub-7 GHz band for AP and STA (S1710).

For example, in relation to transmission of sector sweep and feedback/ACK frame on BRP procedure, allocation information for specific time and/or frequency resources (e.g., channel, subchannel) for transmission of specific PPDU/frame of AP, information for candidate sectors of AP and STA, and information for TX sector pattern order within PPDU/frame of AP may be indicated.

In this regard, specific time and/or frequency resources may be resources allocated for operation in the mmWave band.

The AP may transmit a specific PPDU/frame in the allocated time and/or frequency resources (S 1720). Here, a specific training field, etc. may be inserted into a specific PPDU/frame so that the STA's RX sector sweep may be performed simultaneously with the AP's TX sector sweep. For example, the specific training field may be designed to have a structure identical to or similar to a TRN field, a TRN-R unit, etc. of an EDMG BRP-RX/TX PPDU. In this regard, information for a TX sector pattern of a specific training field, etc. may be indicated.

At this time, the STA may measure the best TX sector ID of the AP using the corresponding PPDU/frame and perform its own RX sector sweep (S1730).

After the AP transmits the PPDU/frame, the STA may transmit a feedback frame to the AP in the sub-7 GHz band (S1740). Here, the feedback frame may include information for the best TX sector ID of the AP.

After the STA transmits a feedback frame, the AP may transmit a response frame (e.g., an ACK frame) in the sub-7 GHz band (S1750).

In a simplified procedure as in Fig. 17, the STA may use its measured best RX sector in the TX sector direction, and the AP may use its best TX sector fed back from the STA in the RX sector direction.

That is, with respect to the steps in the aforementioned FIG. 17, steps S1710, S1740, and S1750 may be configured/defined to be performed in the sub-7 GHz band, and steps S1720 and S1730 may be performed in the mmWave band.

Additionally, in a simplified procedure such as FIG. 17, when transmitting a frame for feeding back information such as the best sector ID in a sub-7 GHz band, contention may be required, which may cause a delay.

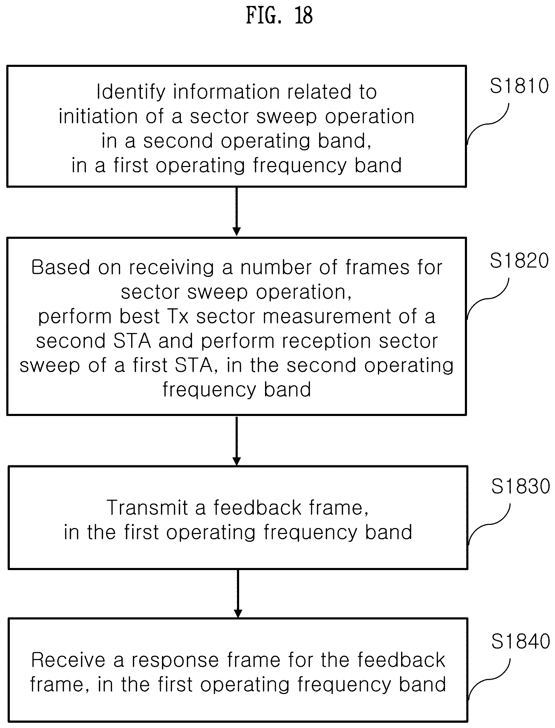

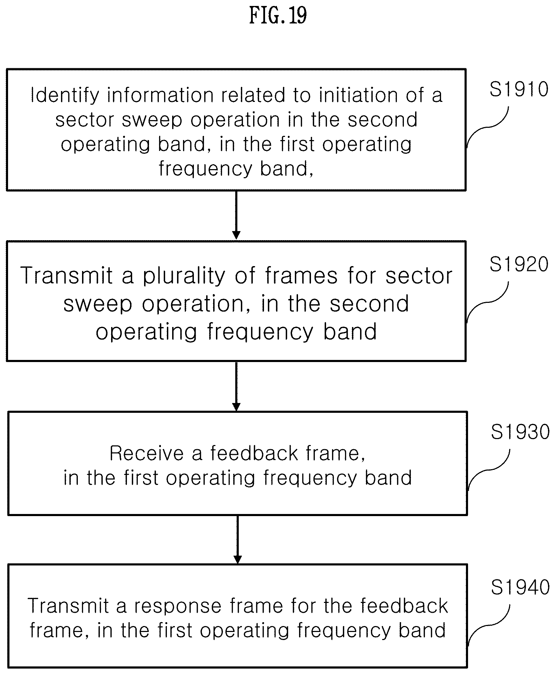

Hereinafter, the operation of the STA according to the embodiments of the present disclosure described above will be described with reference to FIGS. 18 and 19. That is, the examples of FIGS. 18 and 19 may correspond to some of the various examples of the present disclosure.

FIG. 18 illustrates an operation flow chart by a first STA according to an embodiment of the present disclosure.

Referring to FIG. 18, with respect to the SLS procedure and the BRP procedure described in the present disclosure, the first STA may correspond to a responder (e.g., STA in FIGS. 12 to 17) and the second STA may correspond to an initiator (e.g., AP in FIGS. 12 to 17).

In the first operating frequency band, the first STA may identiry/be indicated/obtain information related to the initiation of a sector sweep operation (e.g., SLS procedure) in the second operating frequency band (S1810).

In this regard, the first operating frequency band may correspond to one of the 2.4 GHz band, the 5 GHz band, or the 6 GHz band (i.e., the sub-7 GHz band), and the second operating frequency band may correspond to one of the millimeter wave (mmWave) band or the 60 GHz band.

Here, the information may include allocation information of resources for the sector sweep operation.

For example, the allocated resources may include one or more of time resources or frequency resources in the second operating frequency band allocated for the sector sweep operation.

In the second operating frequency band, when the first STA receives a plurality of frames for a sector sweep operation from the second STA in the allocated resources, the first STA may measure the best transmission sector (best TX sector) of the second STA and perform its own reception sector sweep (RX sector sweep) (S1820).

In this regard, the best transmission sector may be replaced and applied with terms such as best transmission region, best transmission direction, best antenna setting, and best antenna weight vector.

For example, the best transmission sector may be selected/determined based on the measured SNR for frame reception, etc. Additionally, a reception sector sweep may mean a procedure for an STA to sweep reception beams and select/determine its best reception sector.

In this regard, a plurality of frames may be transmitted in a burst form, and the plurality of frames may be transmitted based on a TX sector sweep. At this time, each frame included in the plurality of frames may include identification information (e.g., ID) for a transmission sector of the frame. Additionally or alternatively, information related to the initiation of a sector sweep operation may further include information on the number of frames included in a burst to be transmitted.

Additionally, each frame included in the plurality of frames may include a training field related to an RX sector sweep of the first STA. At this time, for reception of each frame included in the plurality of frames, the first STA may be configured to receive the training field in a mode based on the RX sector sweep, and receive a portion of the frame excluding the training field in a quasi-omni mode.

In the first operating frequency band, a feedback frame including identification information for the best transmission sector of the second STA may be transmitted to the second STA (S1830).

In the first operating frequency band, the first STA may receive a response frame to the feedback frame from the second STA (S1840).

After the aforementioned sector sweep operation (e.g., SLS procedure), a beam refinement operation (e.g., BRP procedure) may be additionally performed for more detailed beamforming training.

For example, a first STA may identify/be indicated/obtain information related to initiation of a beam refinement operation in a second operating frequency band in a first operating frequency band. Here, the information related to initiation of the beam refinement operation may include allocation information of resources for the beam refinement operation and identification information for one or more candidate sectors determined based on the aforementioned sector sweep operation.

Additionally, in the second operating frequency band, when the first STA receives a specific frame transmitted from the second STA by applying a TX sector sweep based on one or more candidate sectors in the resources for the beam refinement operation, the first STA may measure a best transmission sector of the second STA and perform an RX sector sweep of the second STA related to the beam refinement operation.

Here, the specific frame may include a training field for an RX sector sweep associated with the beam refinement operation. In this regard, information associated with the initiation of the aforementioned beam refinement operation may further include information for a TX sector pattern order within the specific frame.

Additionally, in the first operating frequency band, the first STA may transmit to the second STA a feedback frame including identification information for the best transmission sector of the second STA measured in relation to the beam refinement operation. Thereafter, in the first operating frequency band, the first STA may receive a response frame to the feedback frame from the second STA.

The method performed by the first STA described in the example of FIG. 18 may be performed by the first device (100) of FIG. 1. For example, one or more processors (102) of the first device (100) of FIG. 1 may be configured to identify information related to the initiation of a sector sweep operation in a second operating frequency band through one or more transceivers (106), receive a plurality of frames based on the TX sector sweep, perform best transmission sector measurement of the second STA and reception sector sweep of the first STA, transmit a feedback frame, and receive a response frame. Furthermore, one or more memories (104) of the first device (100) may store commands for performing the method described in the example of FIG. 18 or the examples described below when executed by one or more processors (102).

FIG. 19 illustrates an operation flow chart by a second STA according to an embodiment of the present disclosure.

Referring to FIG. 19, with respect to the SLS procedure and the BRP procedure described in the present disclosure, the first STA may correspond to a responder (e.g., the STA in FIGS. 12 to 17) and the second STA may correspond to an initiator (e.g., the AP in FIGS. 12 to 17).

In the first operating frequency band, the second STA may identify/be indicated/obtain information related to the initiation of a sector sweep operation (e.g., SLS procedure) in the second operating frequency band (S1910). Here, the information may include allocation information of resources for the sector sweep operation.

In the second operating frequency band, the second STA may transmit a plurality of frames for a sector sweep operation to the first STA in the allocated resources (S1920). In this regard, the plurality of frames may be transmitted in a format of a burst, and the plurality of frames may be transmitted based on a transmission sector sweep (TX sector sweep).

In the first operating frequency band, the second STA may receive a feedback frame including identification information for the best transmission sector of the second STA from the first STA (S1930). Thereafter, in the first operating frequency band, the second STA may transmit a response frame for the feedback frame to the first STA (S1940).

In the example of Fig. 19, the specific details of the operating frequency band, transmission and reception of multiple frames, beam refinement operation, best transmission sector, reception sector sweep, etc. are the same as those described in the example of Fig. 18, so redundant description is omitted.

The method performed by the second STA described in the example of FIG. 19 may be performed by the second device (200) of FIG. 1. For example, one or more processors (202) of the second device (200) of FIG. 1 may be configured to check information related to the initiation of a sector sweep operation in a second operating frequency band through one or more transceivers (206), transmit a plurality of frames for the sector sweep operation, receive a feedback frame, and transmit a response frame thereto. Furthermore, one or more memories (204) of the second device (200) may store commands for performing the method described in the example of FIG. 19 or the examples described below when executed by one or more processors (202).

In the existing wireless LAN system, the content about the beamforming training procedure in the sub-7 GHz band is defined. However, the specific content about the SLS procedure and the BRP procedure for beamforming training in the mmWave band is not defined. In this regard, the proposed method in the present disclosure is a specific method for performing beamforming training in the mmWave band, considering the mmWave band support in the wireless LAN system. Specifically, when performing the SLS procedure and the BRP procedure related to beamforming training, it has a new feature that efficient beamforming training can be performed by changing the operating frequency band for each step. According to the proposed method in the present disclosure, it is possible to achieve a new effect that can improve the throughput and/or efficiency in a newly defined operating band (e.g., mmWave band, etc.).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
identifying, in a first operating frequency band, information related to initiation of a sector sweep operation in a second operating frequency band, the information including allocation information of a resource for the sector sweep operation;
in the second operating frequency band, based on receiving a plurality of frames for the sector sweep operation in the resource from the second STA, measuring a best transmission (TX) sector of the second STA and performing a reception (RX) sector sweep of the first STA;
transmitting, in the first operating frequency band, a feedback frame including identification information for the best TX sector to the second STA; and
receiving, in the first operating frequency band, a response frame to the feedback frame from the second STA in the first operating frequency band.

2. The method of claim 1,
wherein the first operating frequency band corresponds to one of a 2.4 GHz band, a 5 GHz band, or a 6 GHz band, and
wherein the second operating frequency band corresponds to one of a millimeter wave (mmWave) band or a 60 GHz band.

3. The method of claim 1,
wherein the resource include at least one of a time resource or a frequency resource in a second operating frequency band allocated for the sector sweep operation.

4. The method of claim 1,
wherein the plurality of frames are transmitted in a format of a burst, and
wherein the plurality of frames are transmitted based on a TX sector sweep.

5. The method of claim 4,
wherein each frame included in the plurality of frames includes identification information for a transmission sector of the frame.

6. The method of claim 4,
wherein the information further includes information for a number of frames included in the burst.

7. The method of claim 1,
wherein each frame included in the plurality of frames includes a training field associated with the RX sector sweep.

8. The method of claim 7,
wherein, for reception of each frame included in the plurality of frames, the training field is received in a mode based on the RX sector sweep, and a portion of the frame excluding the training field is received in a quasi-omni mode.

9. The method of claim 1, further comprising:
identifying, in the first operating frequency band, information related to initiation of a beam refinement operation in a second operating frequency band, the information related to the initiation of the beam refinement operation including allocation information of a resource for the beam refinement operation and identification information for one or more candidate sectors determined based on the sector sweep operation;
in the second operating frequency band, based on receiving a specific frame transmitted by applying a TX sector sweep based on one or more candidate sectors in the resource for the beam refinement operation, measuring a best Tx sector of the second STA and performing an RX sector sweep related to the beam refinement operation;
transmitting, in the first operating frequency band, a feedback frame including identification information for the best Tx sector to the second STA; and
receiving, in the first operating frequency band, a response frame to the feedback frame in the first operating frequency band.

10. The method of claim 9,
wherein information related to the initiation of the beam refinement operation further includes information for the TX sector pattern order within the specific frame.

11. The method of claim 9,
wherein the specific frame includes a training field for an RX sector sweep related to the beam refinement operation.

12. An apparatus for a first station (STA) in a wireless local area network (WLAN) system, the apparatus comprising:
at least one transceiver; and
at least one processor connected to the at least one transceiver,
wherein the at least one processor is configured to:
identify information related to initiation of a sector sweep operation in a second operating frequency band in a first operating frequency band, the information including allocation information of a resource for the sector sweep operation;
based on receiving a plurality of frames for the sector sweep operation in the resource from the second STA in the second operating frequency band, measure a best transmission (TX) sector of the second STA and perform a reception (RX) sector sweep of the first STA;
transmit a feedback frame including identification information for the best TX sector to the second STA in the first operating frequency band; and
receive a response frame to the feedback frame from the second STA in the first operating frequency band.

13. A method performed by a second station (STA) in a wireless LAN system, the method comprising:
identifying, in a first operating frequency band, information related to initiation of a sector sweep operation in a second operating frequency band, the information including allocation information of a resource for the sector sweep operation;
transmitting, in the second operating frequency band, a plurality of frames for the sector sweep operation in the resource to a first STA;
receiving, in the first operating frequency band, a feedback frame including identification information for a best Tx sector of the second STA from the first STA; and
transmitting, in the first operating frequency band, a response frame to the feedback frame to the first STA.

14. An apparatus for a second station (STA) in a wireless local area network (WLAN) system, the apparatus comprising:
at least one transceiver; and
at least one processor connected to the at least one transceiver,
wherein the at least one processor is configured to:
identify, in a first operating frequency band, information related to initiation of a sector sweep operation in a second operating frequency band, the information including allocation information of a resource for the sector sweep operation;
transmit, in the second operating frequency band, a plurality of frames for the sector sweep operation in the resource to a first STA;
receive, in the first operating frequency band, a feedback frame including identification information for a best Tx sector of the second STA from the first STA; and
transmit, in the first operating frequency band, a response frame to the feedback frame to the first STA.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 11.

16. At least one non-transitory computer-readable medium storing at least one instruction, wherein:
the at least one instruction controls a device to perform a method according to any one claim of claims 1 to 11 in a wireless local area network (WLAN) system by being executed by at least one processor.
